# EUROPÄISCHE PATENTSCHRIFT

(11) **EP 1 961 101 B1**
(45) Veröffentlichungstag und Bekanntmachung des Hinweises auf die Patenterteilung: **02.02.2011**
(21) Anmeldenummer: 06807117.4
(22) Anmeldetag: 10.10.2006
(51) Int. Cl.: H02K 5/173, F16C 35/07

(54) **Lagersystem für einen Elektromotor und Elektromotor**
Bearing system for an electric motor and electric motor
Systeme de palier pour moteur électrique et moteur électrique

(30) Priorität: 06.12.2005 DE 102005058078
(43) Veröffentlichungstag der Anmeldung: 27.08.2008
(73) Patentinhaber: ROBERT BOSCH GMBH, 70442 Stuttgart (DE)
(72) Erfinder: LUNG, Eberhard, 71636 Ludwigsburg (DE); ECKERT, Oliver, 71686 Remseck (DE); CHOMBO VIDALES, Ricardo, 71522 Steinbach (DE); BAUCH, Christa, 71723 Grossbottwar (DE); NGUYEN, Quoc-Dat, 72760 Reutlingen (DE); GERSTENBERGER, Richard, 71717 Beilstein (DE); LOHRMANN, Reinhold, 71706 Hardthof (DE); NGUYEN, Ngoc-Thach, 71723 Grossbottwar (DE)
(86) Internationale Anmeldenummer: PCT/EP2006/067233
(87) Internationale Veröffentlichungsnummer: WO 2007/065749

(56) Entgegenhaltungen:
- EP-A- 0 483 464
- FR-A- 2 073 198
- GB-A- 701 913
- JP-A- 10 299 785
- US-A- 2 101 346
- US-A- 2 837 382
- US-A- 3 186 701

## Beschreibung

### Stand der Technik

Die Erfindung betrifft ein Lagersystem zum Lagern einer Welle. Speziell betrifft die Erfindung ein Lagersystem zum Lagern einer Welle eines Elektromotors und einen Elektromotor mit solch einem Lagersystem.

Aus der DE 100 19 512 A1 ist ein Elektromotor bekannt, der insbesondere als Fensterheber- oder Schiebedachmotor ausgestaltet sein kann. Der bekannte Elektromotor weist einen Rotor und einen Stator auf, die zum Antreiben einer Welle dienen. Die Welle steht dabei mit einem Getriebe im Eingriff. Zur Lagerung der Welle sind ein Festlager und ein am Ende der Welle angeordnetes Loslager vorgesehen. Das Loslager ermöglicht dabei auch einen gewissen Ausgleich von Längenänderungen der Welle, die beispielsweise durch Temperaturerhöhungen während des Betriebs des Elektromotors verursacht werden.

Bei einem Elektromotor, wie er aus der DE 100 19 512 A1 bekannt ist, kann bei dem Loslager ein Press- und ein Schiebesitz am äußeren Rollbahnkörper beziehungsweise am inneren Rollbahnkörper vorgesehen sein. Der Schiebesitz hat dabei eine Spielpassung, wodurch der Nachteil besteht, dass im Lastwechselbetrieb mit starkem Geräusch, erhöhter Reibung, Verschleiß und einer Verringerung der Lebensdauer zu rechnen ist. Diese Nachteile bestehen bei gewissen Materialpaarungen in besonderem Maße. Beispielsweise kann die Welle aus Aluminium ausgebildet sein, während das Lager aus Stahl ausgebildet ist. Durch die unterschiedliche Wärmeausdehnung kommt es hierbei in gewissen Temperaturbereichen zu einer Vergrößerung des Spiels der Spielpassung, so dass solche Materialkombinationen in Bezug auf die damit verbundenen Nachteile, insbesondere der Geräuschentwicklung, unter Umständen nicht zur Anwendung kommen können.

Ein Lagersystem gemäß der Präambol des Anspruchs 1 is aus US 2 101 346 bekannt.

### Vorteile der Erfindung

Das erfindungsgemäße Lagersystem mit den Merkmalen des Anspruchs 1 und der erfindungsgemäße Elektromotor mit den Merkmalen des Anspruchs 5 haben demgegenüber den Vorteil, dass in der radialen Richtung eine zumindest im Wesentlichen spielfreie Lagerung der Welle in dem das Loslager des Lagersystems bildenden Wälzlager möglich ist. Außerdem ermöglicht die erfmdungsgemäße Lösung auch bei Materialpaarungen, bei denen das Problem unterschiedlicher thermischer Ausdehnungskoeffizienten besteht, einen zuverlässigen und insbesondere geräuschreduzierten Betrieb.

Durch die in den Unteransprüchen aufgeführten Maßnahmen sind vorteilhafte Weiterbildungen des im Anspruch 1 angegebenen Lagersystems und des im Anspruch 5 angegebenen Elektromotors möglich.

In vorteilhafter Weise ist das Federelement als wurmförmige Zugfeder ausgestaltet. Bei dem montierten Lagersystem kann dadurch eine zuverlässige Vorspannung des Federelements über die Lebensdauer des Elektromotors gewährleistet werden. Weil das Federelement zusätzlich als geschlossener Ring ausgestaltet ist, kann das Federelement auch entlang seiner kreisförmig gekrümmten Mittelachse vorgespannt werden. Im montierten Zustand wird das Federelement dadurch in seiner vorgegebenen Lage gehalten. Außerdem wird auf Grund der radialen Vorspannung des Federelements eine vorteilhafte Aufnahme der in radialer Richtung wirkenden Kräfte der Welle über das Wälzlager von dem Gehäuse oder einem anderen Bauteil des Elektromotors ermöglicht. Ein Federelement, das als geschlossener Ring ausgestaltet ist, kann an seinen Enden durch Einstecken des ersten Endes des Federelementes in das zweite Ende des Federelementes verbunden sein, wobei sich das erste Ende beispielsweise innerhalb des zweiten Endes entsprechend einer Schraubverbindung verhakt. Zusätzlich oder alternativ können die beiden Enden des Federelementes allerdings auch durch eine Löt- oder Schweißverbindung verbunden sein. Bei einer formschlüssigen Verbindung der beiden Enden des Federelementes ohne eine zusätzliche Löt- oder Schweißverbindung ist der Herstellungsaufwand gering, so dass die Stückkosten des Lagersystems oder des Elektromotors diesbezüglich relativ niedrig sind. Andererseits wird durch eine Löt- oder Schweißverbindung eine hohe Festigkeit erzielt, die für gewisse Anwendungen von Vorteil sein kann.

Das Federelement kann in eine im Bereich des inneren Rollbahnkörpers oder des äußeren Rollbahnkörpers vorgesehene Nut zumindest teilweise eingebracht sein. Diese Nut kann an dem äußeren Rollbahnkörper des Wälzlagers, an einem Gehäuseteil des Elektromotors, das zum Aufnehmen des Wälzlagers eine Aussparung aufweist, dem inneren Rollbahnkörper oder im Bereich des inneren Rollbahnkörpers an der Welle vorgesehen sein. Dabei können auch zwei oder mehr Nuten vorgesehen sein, die zwei oder mehr Federelemente aufnehmen. Diese Nuten sind vorzugsweise an dem gleichen Bauteil ausgebildet und gewährleisten eine zumindest im Wesentlichen parallele Orientierung des inneren Rollbahnkörpers und des äußeren Rollbahnkörpers des Wälzlagers zu einer gewünschten Drehachse der Welle des Elektromotors.

### Zeichnung

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 einen Elektromotor mit einem Lagersystem in einer auszugsweisen Schnittdarstellung entsprechend einem ersten Ausführungsbeispiel der Erfindung;
Fig. 2 den in Fig. 1 mit II bezeichneten Ausschnitt entsprechend dem ersten Ausführungsbeispiel der Erfmdung in einer detaillierten Darstellung;
Fig. 3 den in Fig. 2 mit III bezeichneten Ausschnitt entsprechend einem zweiten Ausführungsbeispiel der Erfindung;
Fig. 4 den in Fig. 1 mit II bezeichneten Ausschnitt des Elektromotors entsprechend einem dritten Ausführungsbeispiel der Erfindung;
Fig. 5 den in Fig. 1 mit II bezeichneten Ausschnitt eines Elektromotors entsprechend einem vierten Ausführungsbeispiel der Erfindung;
Fig. 6 eine teilweise geschnittene, auszugsweise Darstellung eines Federelementes des Lagersystems des Elektromotors der Erfindung.

### Beschreibung der Ausführungsbeispiele

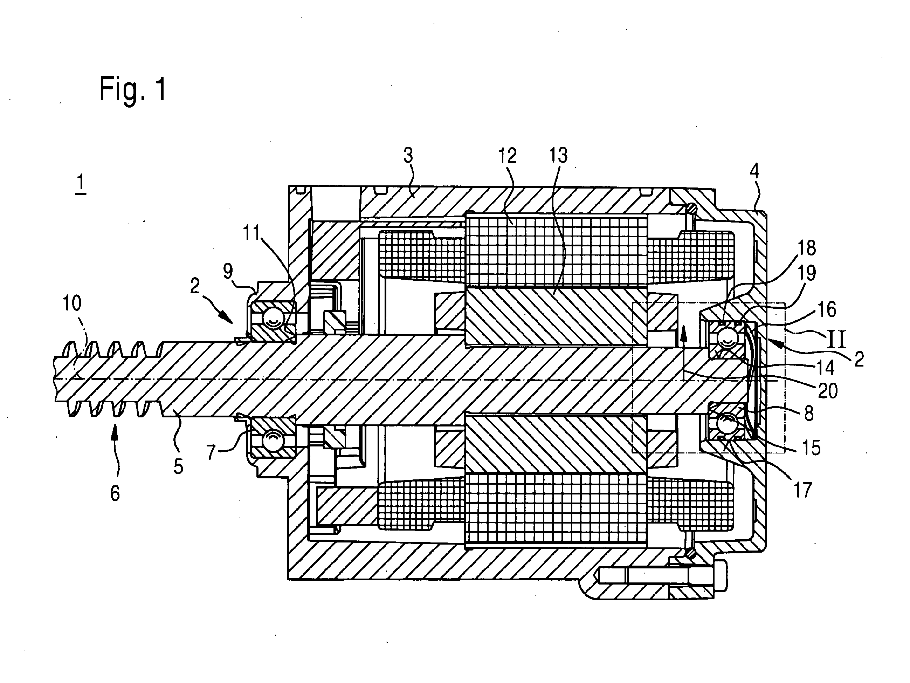

Fig. 1 zeigt ein Ausführungsbeispiel eines Elektromotors 1 der Erfindung. Der Elektromotor 1 kann insbesondere als Asynchronmotor ausgestaltet sein und für eine elektrische Servo-Lenkung dienen. Der Elektromotor 1 kann auch zur fremdkraftbetätigten Verstellung von Elementen eines Kraftfahrzeugs dienen. Der erfindungsgemäße Elektromotor 1 eignet sich jedoch auch für andere Anwendungsfälle.

Der Elektromotor 1 ist mit einem Lagersystem 2 ausgestattet, das nachfolgend im Detail weiter beschrieben ist. Der Elektromotor weist ein aus mehreren Gehäuseteilen 3, 4 bestehendes Gehäuse 3, 4 auf. Der Elektromotor 1 weist eine Welle 5 auf, die teilweise aus dem Gehäuse 3, 4 ragt und eine Schnittstelle 6 aufweist, die direkt oder über ein Getriebe mit Elementen einer Servolenkung oder dergleichen in Wirkverbindung steht. Die Welle 5 ist über ein als Festlager ausgebildetes Wälzlager 7 und über ein als Loslager ausgebildetes Wälzlager 8 in dem Gehäuse 3, 4 des Elektromotors 1 gelagert. Das Wälzlager 7 ist über eine Bördelung 9 des Gehäuseteils 3 festgeklemmt, so dass insbesondere in einer radialen Richtung, das heißt in Richtung einer Drehachse 10 der Welle 5, kein Spiel zwischen dem Gehäuseteil 3 und dem Wälzlager 7 besteht. Ferner ist das Wälzlager 7 auf die Welle 5 aufgepresst, wobei das Wälzlager 7 an einer Schulter 11 der Welle 5 anliegt, so dass auch zwischen dem Wälzlager 7 und der Welle 5 kein Spiel in der axialen Richtung besteht.

Der Elektromotor 1 weist außerdem einen mit dem Gehäuse 3, 4 des Elektromotors 1 verbundenen Stator 12, der aus mehreren Statorpaketen besteht, und einen mit der Welle 5 verbundenen Rotor 13 auf, der aus mehreren Rotorpaketen besteht. Im Betrieb des Elektromotors 1 wird mittels des Stators 12 und des Rotors 13 ein Drehmoment erzeugt, das über die Welle 5 an die Schnittstelle 6 übertragen wird.

Das Wälzlager 8 ermöglicht eine Verstellung der Welle 5 in Richtung der Drehachse 10. Beispielsweise kann auf Grund von Temperaturänderungen beim Betrieb des Elektromotors 1 eine Längenänderung der Welle 5 in Bezug auf das Gehäuseteil 3 auftreten, die dadurch ausgeglichen wird. Bei dem in Fig. 1 dargestellten Ausführungsbeispiel ist das Wälzlager 8 an einer Fläche 14 auf die Welle 5 aufgepresst, wobei es sich an einer Schulter 15 der Welle 5 abstützt. Eine Anstellfeder 16 beaufschlagt das Wälzlager 8 mit einer Anstellkraft. An einer Gleitfläche 17 des Wälzlagers 8 ist ein Schiebesitz des Wälzlagers 8 vorgesehen, wodurch das Wälzlager 8 in Richtung der Drehachse 10 verschiebbar ist. Ferner sind ein erstes Federelement 18 und ein zweites Federelement 19 vorgesehen, die im Bereich der Gleitfläche 17 des Wälzlagers 8 angeordnet sind.

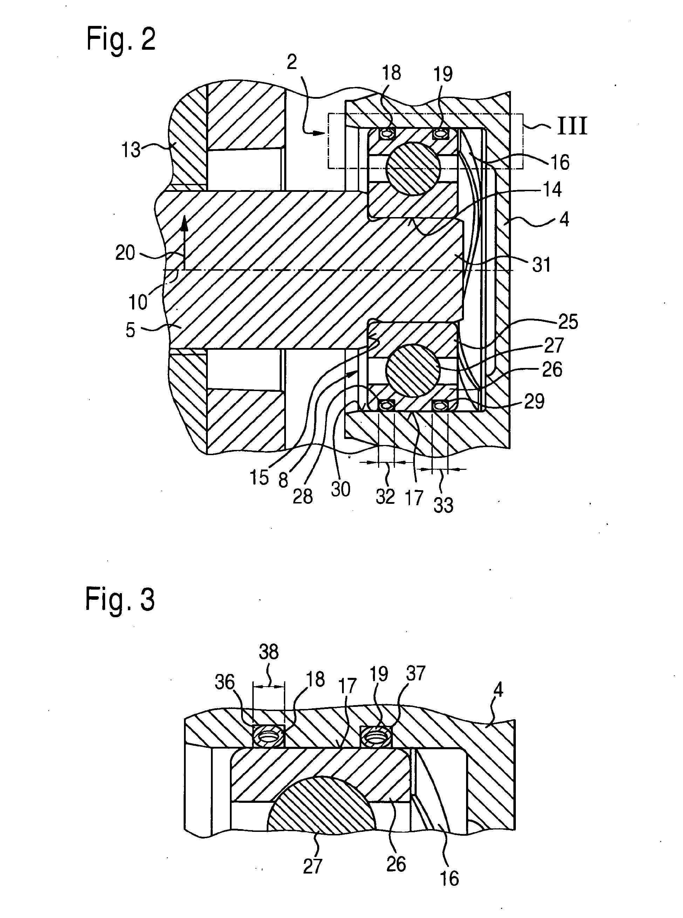

Das Lagersystem 2 umfasst die Wälzlager 7, 8 und die Federelemente 18, 19 und gewährleistet eine zumindest im Wesentlichen spielfreie Lagerung der Welle 5 des Elektromotors 1 in einer radialen Richtung 20. Die Ausgestaltung und die Funktionsweise des Lagersystems 2 des Elektromotors 1 des ersten Ausführungsbeispiels der Erfindung ist im Folgenden anhand der Fig. 2 im Detail weiter beschrieben.

Fig. 2 zeigt den in Fig. 1 mit II bezeichneten Ausschnitt des Elektromotors 1 in einer detaillierten Darstellung.

Das Wälzlager 8 des Lagersystems 2 weist einen inneren Rollbahnkörper 25, einen äußeren Rollbahnkörper 26 und Wälzkörper 27 auf. Die Wälzkörper 27 sind zwischen dem inneren Rollbahnkörper 25 und dem äußeren Rollbahnkörper 26 angeordnet und laufen in Rollbahnen der Rollbahnkörper 25, 26. Das Wälzlager 8 ist als einreihiges Rillenkugellager ausgestaltet, wobei die Wälzkörper 27 durch Kugeln gebildet sind. Das als Radiallager ausgebildete Wälzlager 8 kann allgemein als ein- oder mehrreihiges Rillenkugellager oder Rollenlager, insbesondere Zylinderrollen-, Tonnen-, Nadel- oder Kegelrollenlager, ausgestaltet sein. Die Wälzkörper 27 können dabei als Kugeln, Rollen, Tonnen, Nadeln, Kegeln und in den üblichen Abwandlungen ausgestaltet sein.

Der äußere Rollbahnkörper 26 weist im Bereich der Gleitfläche 17 des Wälzlagers 8 umlaufende Nuten 28, 29 auf, wobei in der Nut 28 das erste Federelement 18 und in der Nut 29 das zweite Federelement 19 angeordnet ist. An der Fläche 14 der Welle 5 ist der innere Rollbahnkörper 25 des Wälzlagers 8 auf die Welle 5 aufgepresst. Ferner kann der äußere Rollbahnkörper 26 im Bereich der Gleitfläche 17 in der Aussparung 30 des Gehäuseteils 4 in Richtung der Drehachse 10 gleiten, um eine gewisse Beweglichkeit der Lagerstelle für die Welle 5 in axialer Richtung zu ermöglichen. Die Federelemente 18, 19 sind in der radialen Richtung 20 vorgespannt, so dass ein Spiel zwischen dem äußeren Rollbahnkörper 26 und dem Gehäuseteil 4 zumindest im Wesentlichen verhindert ist. Außerdem gewährleisten die in Umfangsrichtung zumindest näherungsweise parallel zueinander verlaufenden Federelemente 18, 19, dass der äußere Rollbahnkörper 26 zumindest näherungsweise parallel zu der Drehachse 10 der Welle 5 montiert ist. Speziell kann beim Einbau des Wälzlagers 8 in das Gehäuseteil 4 eine Winkelschiefstellung von weniger als 15 Bogenminuten, insbesondere von weniger als 10 Bogenminuten, gewährleistet werden. Dadurch ist ein zuverlässiger Betrieb des Wälzlagers 8 über die Lebensdauer des Elektromotors 1 gewährleistet. Ferner gewährleisten die Federelemente 18, 19 zusammen mit der Anstellfeder 16, dass bei einer Änderung der Drehrichtung des Elektromotors eine Erschütterung oder ein Klopfen verhindert oder vermindert ist.

Ferner können die Welle 5, das Wälzlager 8 und die Gehäuseteile 3, 4 auch aus unterschiedlichen Materialien bestehen. Beispielsweise können die Welle 5 und/oder das Gehäuseteil 4 aus Aluminium gebildet sein, während das Wälzlager 8 aus Stahl gebildet ist. Die Betriebstemperatur des Elektromotors 1 kann beim Einsatz in einem Kraftfahrzeug zwischen -40°C und +60°C schwanken, wobei relativ große Unterschiede im thermischen Dehnungsverhalten zwischen den aus Aluminium und den aus Stahl gebildeten Bauteilen des Elektromotors 1 auftreten. Das Lagersystem 2 ermöglicht zum einen eine Verschiebbarkeit der Welle 5 im Bereich eines Endes 31 in axialer Richtung, um solche Längenänderungen auszugleichen, und ermöglicht zum anderen auf Grund der Federelemente 18, 19 eine zuverlässige Ausrichtung des Wälzlagers 8 in Bezug auf die Drehachse 10 der Welle 5, wobei eine zumindest im Wesentlichen spielfreie Lagerung gegeben ist, die auch bei Lastwechseln oder Drehrichtungsänderungen ein Geräusch, Reibung, Verschleiß oder eine Verringerung der Lebensdauer verhindert.

Eine Breite 32 der Nut 28 ist kleiner als eine Breite oder ein Durchmesser des ersten Federelements 18, wenn das Federelement 18 außerhalb der Nut 28 entspannt ist, so dass beim Einbringen des Federelementes 18 in die Nut 28 eine Vorspannung des Federelementes 18 bewirkt wird. Insbesondere dadurch steht das erste Federelement 18 etwas über die Gleitfläche 17 des äußeren Rollbahnkörpers 26 hinaus, wenn das Wälzlager 8 noch nicht in die Aussparung 30 eingebracht ist. Beim Einbringen des Wälzlagers 8 in die Aussparung 30 des Gehäuseteils 4 erfolgt dann eine Vorspannung des Federelementes 18 in der radialen Richtung 20. Entsprechend ist eine Breite 33 der Nut 29 kleiner als eine Breite oder ein Durchmesser des zweiten Federelementes 19, um das Federelement 19 vorzuspannen.

Fig. 3 zeigt den in Fig. 2 mit III bezeichneten Ausschnitt eines Elektromotors 1 mit einem Lagersystem gemäß einem zweiten Ausführungsbeispiel der Erfindung. In diesem Ausführungsbeispiel sind weder an dem inneren Rollbahnkörper 25 noch an dem äußeren Rollbahnkörper 26 Nuten vorgesehen. Allerdings sind an dem Gehäuseteil 4 des Gehäuses 3, 4 des Elektromotors 1 im Bereich der Aussparung 30 des Gehäuseteils 4 und der Gleitfläche 17 des äußeren Rollbahnkörpers 26 des Wälzlagers 8 Nuten 36, 37 vorgesehen, die in Bezug auf die Drehachse 10 der Welle 5 umlaufend ausgestaltet sind. Die Nuten 36, 37 sind somit jeweils zylinderringförmig ausgebildet. In die Nut 36 ist das erste Federelement 18 8 zumindest teilweise eingesetzt und in die Nut 37 ist das zweite Federelement 19 zumindest teilweise eingesetzt. Eine Breite 38 der Nut 36 ist kleiner als eine Breite oder ein Durchmesser des Federelementes 18, sofern sich das Federelement 18 außerhalb der Nut 36 im entspannten Zustand befindet. Beim Einbringen des Federelementes 18 in die Nut 36 erfolgt eine Vorspannung des Federelementes 18, so dass insbesondere dadurch ein Überstehen des Federelementes 18 über die Aussparung 30 des Gehäuseteils 4 bewirkt ist. Beim Einbringen des Wälzlagers 8 in die Aussparung 30 wird das Federelement 18 zumindest teilweise in die Nut 36 gedrückt. Somit ist das Federelement 18 im montierten Zustand des Wälzlagers 8 in der radialen Richtung 20 vorgespannt. Entsprechendes gilt für die Nut 37 des Gehäuseteils 4 und das in der Nut 37 vorgesehene zweite Federelement 19.

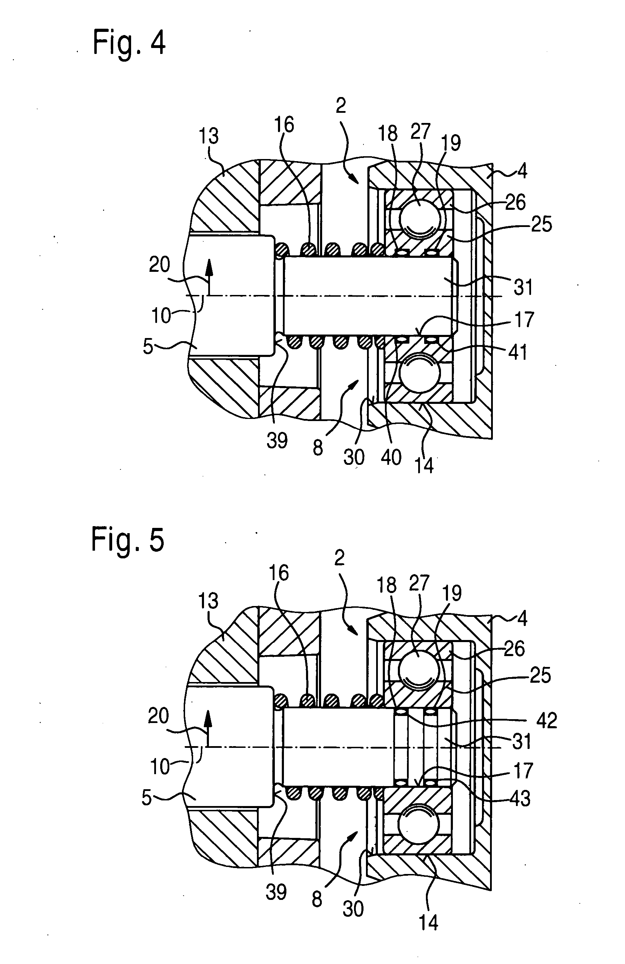

Fig. 4 zeigt den in Fig. 1 mit II bezeichneten Ausschnitt eines Elektromotors 1 mit einem Lagersystem 2 gemäß einem dritten Ausführungsbeispiel der Erfindung. Bei diesem Ausführungsbeispiel ist der äußere Rollbahnkörper 26 im Bereich der Fläche 14 in die Aussparung 30 des Gehäuseteils 4 eingepresst, so dass der äußere Rollbahnkörper 26 bezüglich des Gehäuseteils 4 des Elektromotors 1 nicht verschiebbar ist. Ferner ist zwischen dem inneren Rollbahnkörper 25 im Bereich einer Gleitfläche 17 ein Schiebesitz bezüglich der Welle 5 ausgebildet. In diesem Fall ist die Anstellfeder 16 bezüglich des Wälzlagers 8 auf der Seite der.Welle 5 angeordnet, wobei die Anstellfeder 16 die Welle 5 abschnittsweise umschließt und sich einerseits an einer Schulter 39 der Welle 5 und andererseits an dem inneren Rollbahnkörpers 25 abstützt. Ferner weist der innere Rollbahnkörper 25 des Wälzlagers 8 Nuten 40, 41 auf, in denen die Federelemente 18, 19 angeordnet sind. Auf Grund der Vorspannung der Federelemente 18, 19 wird der innere Rollbahnkörper 25 von der Welle 5 mitgenommen, wobei eine gewisse axiale Verschiebbarkeit gewährleistet ist, die ausreicht, um beispielsweise temperaturbedingte Längenänderungen der Welle 5 in Bezug auf die Gehäuseteile 3, 4 auszugleichen. Ferner ist in der radialen Richtung 20 eine zumindest im Wesentlichen spielfreie Lagerung der Welle an ihrem Ende 31 ermöglicht.

Fig. 5 zeigt den in Fig. 1 mit II bezeichneten Ausschnitt des Elektromotors 1 mit dem Lagersystem 2 entsprechend einem vierten Ausführungsbeispiel der Erfindung. Das in Fig. 5 dargestellte vierte Ausführungsbeispiel entspricht im Wesentlichen dem in Fig. 4 dargestellten dritten Ausführungsbeispiel. Allerdings weist weder der innere Rollbahnkörper 25 noch der äußere Rollbahnkörper 26 des Wälzlagers 8 eine Nut auf. Allerdings weist die Welle 5 an ihrem Ende 31 im Bereich der Gleitfläche 17 des inneren Rollbahnköipers 25 Nuten 42, 43 auf, in denen die Federelemente 18, 19 angeordnet sind. Die an der Welle ausgebildeten Nuten 18, 19 weisen dabei Breiten auf, die jeweils kleiner als eine Breite beziehungsweise ein Durchmesser des entsprechenden Federelements 18, 19 sind, so dass eine Vorspannung der Federelemente 18, 19 in der radialen Richtung 20 bewirkt wird, wie es bereits oben anhand der Ausführungsbeispiele 1 und 2 im Detail beschrieben ist. Entsprechendes gilt auch für das in Fig. 4 dargestellte dritte Ausführungsbeispiel der Erfindung.

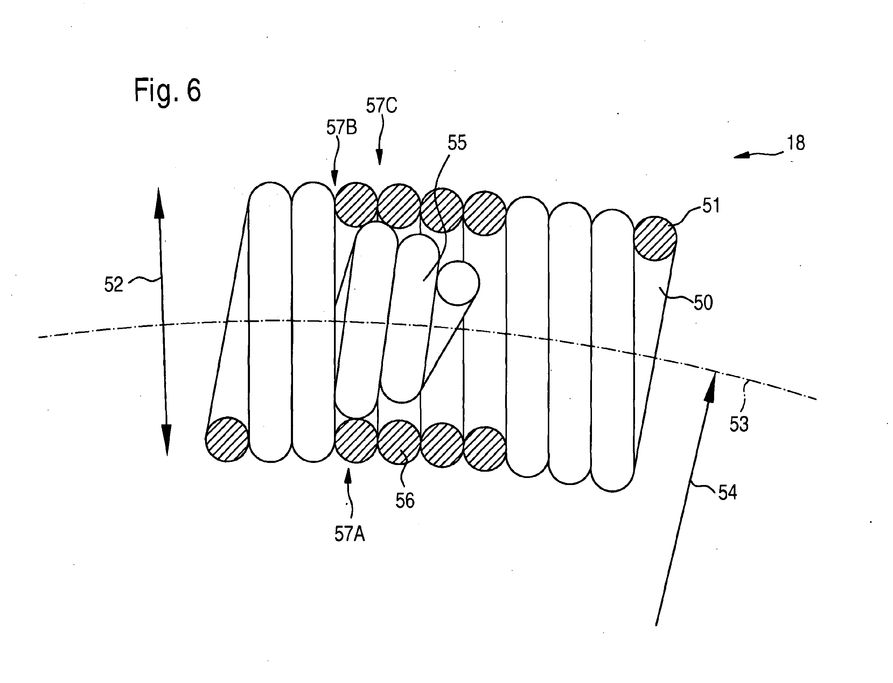

Fig. 6 zeigt das erste Federelement 18 in einer auszugsweisen, teilweisen geschnittenen Darstellung. Das Federelement 18 weist einen spiralförmig gebogenen Grundkörper 50 auf, der einen zumindest näherungsweise kreisförmigen Querschnitt 51 aufweist. Ein Durchmesser 52 des Federelements 18 ist durch die Krümmung des Grundkörper 50 in Bezug auf eine Mittelachse 53 vorgegeben. Ferner ist das Federelement 18 so gebogen, dass die Mittelachse 53 des Federelementes 18 zumindest näherungsweise auf einer Kreislinie liegt. Ein mittlerer Durchmesser 54 der kreisförmig gebogenen Mittelachse 53 des ersten Federelements 18 ist an einen mittleren Durchmesser der Nut 28, der Nut 36, der Nut 40 oder der Nut 42 angepasst. Um eine zusätzliche Vorspannung des Federelementes 18 zu bewirken, ist der mittlere Durchmesser 54 vorzugsweise etwas kleiner als der mittlere Durchmesser der Nut 28, der Nut 36, der Nut 40 oder der Nut 42 gewählt.

Um das Federelement 18 als geschlossenen Ring auszubilden, ist ein erstes Ende 55 des Federelementes 18 mit einem zweiten Ende 56 des Federelementes 18 verbunden. Bei der in der Fig. 6 dargestellten Ausgestaltung ist das erste Ende 55 in das zweite Ende 56 eingesteckt, wobei sich der Wicklungsdurchmesser des Federelementes 18 8 im Bereich des ersten Endes 55 kontinuierlich verringert. Das erste Ende 55 verhakt sich dabei in den Windungen des zweiten Endes 56, wodurch eine formschlüssige Verbindung analog einer Schraubverbindung gebildet ist. Um die Verbindung der beiden Enden 55, 56 weiter zu verbessern, kann in einem oder mehreren der Bereiche 57A, 57B, 57C eine Verbindung zwischen den Enden 55, 56 durch Löten oder Schweißen ausgebildet werden.

In dem dargestellten Ausführungsbeispiel des Federelementes 18 ist durch den Durchmesser 52 auch die Breite des Federelementes 18 gegeben. Das zweite Federelement 19 ist entsprechend dem ersten Federelement 18 ausgestaltet.

Die Erfindung ist nicht auf die beschriebenen Ausführungsbeispiele beschränkt.

## Patentansprüche

1. Lagersystem (2) mit einer Welle (5), einem Wälzlager (8), das eine Verschiebbarkeit der Welle (5) entlang einer Drehachse (10) der Welle (5) ermöglicht und zumindest einen inneren Rollbahnkörper (25), zumindest einen äußeren Rollbahnkörper (26) und zwischen dem inneren Rollbahnkörper (25) und dem äußeren Rollbahnkörper (26) angeordnete Wälzkörper (27) aufweist, und zumindest einem Federelement (18), das in einem Bereich einer die Verschiebbarkeit der Welle (5) entlang der Drehachse (10) ermöglichenden, an einem der Rollbahnkörper vorgesehenen Gleitfläche (17) des Wälzlagers (8) angeordnet ist und in einer radialen Richtung (20) vorspannbar ist, um eine zumindest im Wesentlichen spielfreie Lagerung der Welle (5) in der radialen Richtung (20) zu ermöglichen, wobei das Federelement (18) als geschlossener Ring ausgestaltet ist,
**dadurch gekennzeichnet,**
**dass** ein erstes Ende (55) des Federelementes (18) mit einem zweiten Ende (56) des Federelementes (18) verbunden ist,
a) **dass** der äußere Rollbahnkörper (26) des Wälzlagers (7) zumindest eine außenliegende Nut (28) aufweist, in der das Federelement (18) zumindest teilweise angeordnet ist, dass eine Breite (32) der außenliegenden Nut (28) des äußeren Rollbahnkörpers (26) kleiner ist als eine Breite des entspannten Federelementes (18) und dass das Federelement (18) auf Grund der Anordnung in der außenliegenden Nut (28) vorgespannt ist,
oder
b) **dass** der innere Rollbahnkörper (25) des Wälzlagers (8) zumindest eine innenliegende Nut (40) aufweist, in der das Federelement (18) zumindest teilweise angeordnet ist, dass eine Breite der innenliegenden Nut (40) des inneren Rollbahnkörpers (25) kleiner ist als eine Breite des entspannten Federelementes (18) und dass das Federelement (18) auf Grund der Anordnung in der innenliegenden Nut (40) vorgespannt ist,
oder
c) **dass** die Welle (5) zumindest eine Nut (42) aufweist, dass das Federelement (18) zumindest teilweise in der Nut (42) angeordnet ist, dass eine Breite der Nut (42) der Welle (5) kleiner ist als eine Breite des entspannten Federelements (18) und dass das Federelement (18) auf Grund der Anordnung in der Nut (42) vorgespannt ist.

2. Lagersystem nach Anspruch 1,
**dadurch gekennzeichnet,**
**dass** das Federelement (18) als wurmförmige Zugfeder ausgestaltet ist.

3. Lagersystem nach Anspruch 1 oder 2,
**dadurch gekennzeichnet,**
**dass** das erste Ende (55) des Federelementes (18) zum formschlüssigen Verbinden des ersten Endes (55) des Federelementes (18) mit dem zweiten Ende (56) des Federelementes (18) in das zweite Ende (56) des Federelementes (18) eingesteckt ist.

4. Lagersystem nach einem der Ansprüche 1 bis 3,
**dadurch gekennzeichnet,**
**dass** das erste Ende (55) des Federelementes (18) zum Verbinden des ersten Endes (55) des Federelementes (18) mit dem zweiten Ende (56) des Federelementes (18) durch eine Löt- oder Schweißverbindung verbunden ist.

5. Elektromotor (1), insbesondere Motor für eine elektrische Servo-Lenkung, mit einem Rotor (13) und einem Stator (12), die zum Antreiben einer Welle (5) dienen, wobei die Welle (5) mittels eines Lagersystems (2) gelagert ist, wobei das Lagersystem (2) ein Wälzlager (8), das eine Verschiebbarkeit der Welle (5) entlang einer Drehachse (10) der Welle (5) ermöglicht und zumindest einen inneren Rollbahnkörper (25), zumindest einen äußeren Rollbahnkörper (26) und zwischen dem inneren Rollbahnkörper (25) und dem äußeren Rollbahnkörper (26) angeordnete Wälzkörper (27) aufweist, und zumindest ein Federelement (18) aufweist, das in einem Bereich einer die Verschiebbarkeit der Welle (5) entlang der Drehachse (10) ermöglichenden, an einem der Rollbahnkörper vorgesehenen Gleitfläche (17) des Wälzlagers (8) angeordnet ist und in einer radialen Richtung (20) vorspannbar ist, um eine zumindest im Wesentlichen spielfreie Lagerung der Welle (5) in der radialen Richtung (20) zu ermöglichen, und wobei das Federelement (18) als geschlossener Ring ausgestaltet ist,
**dadurch gekennzeichnet,**
**dass** ein erstes Ende (55) des Federelementes (18) mit einem zweiten Ende (56) des Federelementes (18) verbunden ist,
a) **dass** der äußere Rollbahnkörper (26) des Wälzlagers (7) zumindest eine außenliegende Nut (28) aufweist, in der das Federelement (18) zumindest teilweise angeordnet ist, dass eine Breite (32) der außenliegenden Nut (28) des äußeren Rollbahnkörpers (26) kleiner ist als eine Breite des entspannten Federelementes (18) und dass das Federelement (18) auf Grund der Anordnung in der außenliegenden Nut (28) vorgespannt ist,
oder
b) **dass** der innere Rollbahnkörper (25) des Wälzlagers (8) zumindest eine innenliegende Nut (40) aufweist, in der das Federelement (18) zumindest teilweise angeordnet ist, dass eine Breite der innenliegenden Nut (40) des inneren Rollbahnkörpers (25) kleiner ist als eine Breite des entspannten Federelementes (18) und dass das Federelement (18) auf Grund der Anordnung in der innenliegenden Nut (40) vorgespannt ist,
oder
c) **dass** die Welle (5) zumindest eine Nut (42) aufweist, dass das Federelement (18) zumindest teilweise in der Nut (42) angeordnet ist, dass eine Breite der Nut (42) der Welle (5) kleiner ist als eine Breite des entspannten Federelements (18) und dass das Federelement (18) auf Grund der Anordnung in der Nut (42) vorgespannt ist,
oder
d) **dass** ein Gehäuseteil (4) mit einer Aussparung (30) zum Aufnehmen des Wälzlagers (8) vorgesehen ist, dass das Gehäuseteil (4) im Bereich der Aussparung (30) zumindest eine Nut (36) aufweist, dass das Federelement (18) zumindest teilweise in der Nut (36) angeordnet ist; dass eine Breite (38) der Nut (36) des Gehäuseteils (4) kleiner ist als eine Breite des entspannten Federelements (18) und dass das Federelement (18) auf Grund der Anordnung in der Nut (36) vorgespannt ist.

6. Elektromotor nach Anspruch 5,
**dadurch gekennzeichnet,**
**dass** das Federelement (18) als wurmförmige Zugfeder ausgestaltet ist.

7. Elektromotor nach Anspruch 5 oder 6,
**dadurch gekennzeichnet,**
**dass** das erste Ende (55) des Federelementes (18) zum formschlüssigen Verbinden des ersten Endes (55) des Federelementes (18) mit dem zweiten Ende (56) des Federelementes (18) in das zweite Ende (56) des Federelementes (18) eingesteckt ist.

8. Elektromotor nach einem der Ansprüche 5 bis 7,
**dadurch gekennzeichnet,**
**dass** das erste Ende (55) des Federelementes (18) zum Verbinden des ersten Endes (55) des Federelementes (18) mit dem zweiten Ende (56) des Federelementes (18) durch eine Löt- oder Schweißverbindung verbunden ist.

## Claims

1. Bearing system (2) having a shaft (5), having a rolling bearing (8) which enables the shaft (5) to move along a rotational axis (10) of the shaft (5) and which has at least one inner raceway body (25), at least one outer raceway body (26) and rolling bodies (27) arranged between the inner raceway body (25) and the outer raceway body (26), and having at least one spring element (18) which is arranged in the region of a sliding surface (17), which is provided on one of the raceway bodies and enables the shaft (5) to move along the rotational axis (10), of the rolling bearing (8) and which can be preloaded in a radial direction (20) in order to enable at least substantially play-free mounting of the shaft (5) in the radial direction (20), with the spring element (18) being designed as a closed ring,
**characterized**
**in that** a first end (55) of the spring element (18) is connected to a second end (56) of the spring element (18),
a) **in that** the outer raceway body (26) of the rolling bearing (7) has at least one outside groove (28) in which the spring element (18) is at least partially arranged, in that a width (32) of the outside groove (28) of the outer raceway body (26) is smaller than a width of the relaxed spring element (18), and in that the spring element (18) is preloaded on account of the arrangement in the outside groove (28),
or
b) **in that** the inner raceway body (25) of the rolling bearing (8) has at least one inside groove (40) in which the spring element (18) is at least partially arranged, in that a width of the inside groove (40) of the inner raceway body (25) is smaller than a width of the relaxed spring element (18), and in that the spring element (18) is preloaded on account of the arrangement in the inside groove (40),
or
c) **in that** the shaft (5) has at least one groove (42), in that the spring element (18) is arranged at least partially in the groove (42), in that a width of the groove (42) of the shaft (5) is smaller than a width of the relaxed spring element (18), and in that the spring element (18) is preloaded on account of the arrangement in the groove (42).

2. Bearing system according to Claim 1,
**characterized**
**in that** the spring element (18) is designed as a worm-shaped extension spring.

3. Bearing system according to Claim 1 or 2,
**characterized**
**in that,** for positively locking connection of the first end (55) of the spring element (18) to the second end (56) of the spring element (18), the first end (55) of the spring element (18) is inserted into the second end (56) of the spring element (18).

4. Bearing system according to one of Claims 1 to 3,
**characterized**
**in that,** to connect the first end (55) of the spring element (18) to the second end (56) of the spring element (18), the first end (55) of the spring element (18) is connected by means of a soldered or welded connection.

5. Electric motor (1), in particular motor for an electric servo steering system, having a rotor (13) and a stator (12) which serve for driving a shaft (5), with the shaft (5) being mounted by means of a bearing system (2), with the bearing system (2) having a rolling bearing (8) which enables the shaft (5) to move along a rotational axis (10) of the shaft (5) and which has at least one inner raceway body (25), at least one outer raceway body (26) and rolling bodies (27) arranged between the inner raceway body (25) and the outer raceway body (26), and having at least one spring element (18) which is arranged in the region of a sliding surface (17), which is provided on one of the raceway bodies and enables the shaft (5) to move along the rotational axis (10), of the rolling bearing (8) and which can be preloaded in a radial direction (20) in order to enable at least substantially play-free mounting of the shaft (5) in the radial direction (20), and with the spring element (18) being designed as a closed ring,
**characterized**
**in that** a first end (55) of the spring element (18) is connected to a second end (56) of the spring element (18),
a) **in that** the outer raceway body (26) of the rolling bearing (7) has at least one outside groove (28) in which the spring element (18) is at least partially arranged, in that a width (32) of the outside groove (28) of the outer raceway body (26) is smaller than a width of the relaxed spring element (18), and in that the spring element (18) is preloaded on account of the arrangement in the outside groove (28),
or
b) **in that** the inner raceway body (25) of the rolling bearing (8) has at least one inside groove (40) in which the spring element (18) is at least partially arranged, in that a width of the inside groove (40) of the inner raceway body (25) is smaller than a width of the relaxed spring element (18), and in that the spring element (18) is preloaded on account of the arrangement in the inside groove (40),
or
c) **in that** the shaft (5) has at least one groove (42), in that the spring element (18) is arranged at least partially in the groove (42), in that a width of the groove (42) of the shaft (5) is smaller than a width of the relaxed spring element (18), and in that the spring element (18) is preloaded on account of the arrangement in the groove (42),
or
d) **in that** a housing part (4) is provided with a cutout (30) for receiving the rolling bearing (8), in that the housing part (4) has at least one groove (36) in the region of the cutout (30), in that the spring element (18) is arranged at least partially in the groove (36), in that a width (38) of the groove (36) of the housing part (4) is smaller than a width of the relaxed spring element (18), and in that the spring element (18) is preloaded on account of the arrangement in the groove (36).

6. Electric motor according to Claim 5,
**characterized**
**in that** the spring element (18) is designed as a worm-shaped extension spring.

7. Electric motor according to Claim 5 or 6,
**characterized**
**in that**, for positively locking connection of the first end (55) of the spring element (18) to the second end (56) of the spring element (18), the first end (55) of the spring element (18) is inserted into the second end (56) of the spring element (18).

8. Electric motor according to one of Claims 5 to 7,
**characterized**
**in that**, to connect the first end (55) of the spring element (18) to the second end (56) of the spring element (18), the first end (55) of the spring element (18) is connected by means of a soldered or welded connection.

## Revendications

1. Système de palier (2) comprenant un arbre (5), un palier à roulement (8) qui permet un déplacement de l'arbre (5) le long d'un axe de rotation (10) de l'arbre (5), et au moins un corps de piste de roulement intérieur (25), au moins un corps de piste de roulement extérieur (26) et des corps de roulement (27) disposés entre le corps de piste de roulement intérieur (25) et le corps de piste de roulement extérieur (26), et au moins un élément de ressort (18) qui est disposé dans une région d'une surface de glissement (17) du palier à roulement (8) prévue sur l'un des corps de piste de roulement et permettant le déplacement de l'arbre (5) le long de l'axe de rotation (10) et qui peut être précontraint dans une direction radiale (20), afin de permettre un support sur palier au moins essentiellement sans jeu de l'arbre (5) dans la direction radiale (20), l'élément de ressort (18) étant configuré sous forme de bague fermée,
**caractérisé en ce**
**qu'**une première extrémité (55) de l'élément de ressort (18) est connectée à une deuxième extrémité (56) de l'élément de ressort (18),
a) en ce que le corps de piste de roulement extérieur (26) du palier à roulement (7) présente au moins une rainure située à l'extérieur (28), dans laquelle est disposé au moins en partie l'élément de ressort (18), en ce qu'une largeur (32) de la rainure située à l'extérieur (28) du corps de piste de roulement extérieur (26) est inférieure à une largeur de l'élément de ressort détendu (18) et en ce que l'élément de ressort (18) est précontraint sur la base de l'agencement dans la rainure située à l'extérieur (28),
ou
b) en ce que le corps de piste de roulement intérieur (25) du palier à roulement (8) présente au moins une rainure située à l'intérieur (40), dans laquelle est disposé au moins en partie l'élément de ressort (18), en ce qu'une largeur de la rainure située à l'intérieur (40) du corps de piste de roulement intérieur (25) est inférieure à une largeur de l'élément de ressort détendu (18) et en ce que l'élément de ressort (18) est précontraint du fait de l'agencement dans la rainure située à l'intérieur (40),
ou
c) en ce que l'arbre (5) présente au moins une rainure (42), en ce que l'élément de ressort (18) est disposé au moins en partie dans la rainure (42), en ce qu'une largeur de la rainure (42) de l'arbre (5) est inférieure à une largeur de l'élément de ressort détendu (18) et en ce que l'élément de ressort (18) est précontraint du fait de l'agencement dans la rainure (42).

2. Système de palier selon la revendication 1,
**caractérisé en ce que**
l'élément de ressort (18) est configuré sous forme de ressort de traction vermiculaire.

3. Système de palier selon la revendication 1 ou 2,
**caractérisé en ce que**
la première extrémité (55) de l'élément de ressort (18) en vue de la connexion par engagement par correspondance géométrique de la première extrémité (55) de l'élément de ressort (18) à la deuxième extrémité (56) de l'élément de ressort (18), est insérée dans la deuxième extrémité (56) de l'élément de ressort (18).

4. Système de palier selon l'une quelconque des revendications 1 à 3,
**caractérisé en ce que**
la première extrémité (55) de l'élément de ressort (18), en vue de la connexion de la première extrémité (55) de l'élément de ressort (18) à la deuxième extrémité (56) de l'élément de ressort (18) est connectée par une connexion par brasage ou soudage.

5. Moteur électrique (1), en particulier moteur pour une direction assistée électrique, comprenant un rotor (13) et un stator (12), qui servent à l'entraînement d'un arbre (5), l'arbre (5) étant supporté au moyen d'un système de palier (2), le système de palier (2) présentant un palier à roulement (8), qui permet un déplacement de l'arbre (5) le long d'un axe de rotation (10) de l'arbre (5) et au moins un corps de piste de roulement intérieur (25), au moins un corps de piste de roulement extérieur (26) et des corps de roulement (27) disposés entre le corps de piste de roulement intérieur (25) et le corps de piste de roulement extérieur (26), et au moins un élément de ressort (18), qui est disposé dans une région d'une surface de glissement (17) du palier à roulement (8) prévue sur l'un des corps de piste de roulement et permettant le déplacement de l'arbre (5) le long de l'axe de rotation (10), et qui peut être précontraint dans une direction radiale (20), afin de permettre un support sur palier au moins essentiellement sans jeu de l'arbre (5) dans la direction radiale (20), et l'élément de ressort (18) étant configuré sous forme de bague fermée,
**caractérisé en ce**
**qu'**une première extrémité (55) de l'élément de ressort (18) est connectée à une deuxième extrémité (56) de l'élément de ressort (18),
a) en ce que le corps de piste de roulement extérieur (26) du palier à roulement (7) présente au moins une rainure située à l'extérieur (28), dans laquelle est disposé au moins en partie l'élément de ressort (18), en ce qu'une largeur (32) de la rainure située à l'extérieur (28) du corps de piste de roulement extérieur (26) est inférieure à une largeur de l'élément de ressort détendu (18) et en ce que l'élément de ressort (18) est précontraint sur la base de l'agencement dans la rainure située à l'extérieur (28),
ou
b) en ce que le corps de piste de roulement intérieur (25) du palier à roulement (8) présente au moins une rainure située à l'intérieur (40), dans laquelle est disposé au moins en partie l'élément de ressort (18), en ce qu'une largeur de la rainure située à l'intérieur (40) du corps de piste de roulement intérieur (25) est inférieure à une largeur de l'élément de ressort détendu (18) et en ce que l'élément de ressort (18) est précontraint du fait de l'agencement dans la rainure située à l'intérieur (40),
ou
c) en ce que l'arbre (5) présente au moins une rainure (42), en ce que l'élément de ressort (18) est disposé au moins en partie dans la rainure (42), en ce qu'une largeur de la rainure (42) de l'arbre (5) est inférieure à une largeur de l'élément de ressort détendu (18) et en ce que l'élément de ressort (18) est précontraint du fait de l'agencement dans la rainure (42)
ou
d) en ce qu'une partie de boîtier (4) est pourvue d'un évidement (30) pour recevoir le palier à roulement (8), en ce que la partie de boîtier (4) dans la région de l'évidement (30) présente au moins une rainure (36), en ce que l'élément de ressort (18) est disposé au moins en partie dans la rainure (36), en ce qu'une largeur (38) de la rainure (36) de la partie de boîtier (4) est inférieure à une largeur de l'élément de ressort détendu (18) et en ce que l'élément de ressort (18) est précontraint du fait de l'agencement dans la rainure (36).

6. Moteur électrique selon la revendication 5,
**caractérisé en ce que**
l'élément de ressort (18) est configuré sous forme de ressort de traction vermiculaire.

7. Moteur électrique selon la revendication 5 ou 6,
**caractérisé en ce que**
la première extrémité (55) de l'élément de ressort (18) en vue de la connexion par engagement par correspondance géométrique de la première extrémité (55) de l'élément de ressort (18) à la deuxième extrémité (56) de l'élément de ressort (18), est insérée dans la deuxième extrémité (56) de l'élément de ressort (18).

8. Moteur électrique selon l'une quelconque des revendications 5 à 7,
**caractérisé en ce que**
la première extrémité (55) de l'élément de ressort (18), en vue de la connexion de la première extrémité (55) de l'élément de ressort (18) à la deuxième extrémité (56) de l'élément de ressort (18) est connectée par une connexion par brasage ou soudage.
